# EUROPÄISCHE PATENTSCHRIFT

(11) **EP 3 514 581 B1**
(45) Veröffentlichungstag und Bekanntmachung des Hinweises auf die Patenterteilung: **23.06.2021**
(21) Anmeldenummer: 18210349.9
(22) Anmeldetag: 05.12.2018
(51) Int. Cl.: G02B 5/124

(54) **RETROREFLEKTOR MIT EINER GEKRÜMMTEN OBERFLÄCHE**
RETROREFLECTOR WITH A CURVED SURFACE
RÉTRORÉFLECTEUR DOTÉ D'UNE SURFACE INCURVÉE

(30) Priorität: 22.01.2018 DE 102018101289
(43) Veröffentlichungstag der Anmeldung: 24.07.2019
(73) Patentinhaber: IMOS Gubela GmbH, 77871 Renchen (DE)
(72) Erfinder: WEINGÄRTNER, Simon, 77743 Neuried (DE)
(74) Vertreter: Patentanwälte Bregenzer und Reule Partnerschaftsgesellschaft mbB

(56) Entgegenhaltungen:
- GB-A- 918 015
- GB-A- 1 426 230

## Beschreibung

Die Erfindung betrifft einen Retroreflektor auf einer gekrümmten oder gewölbten Oberfläche oder einer Freiformfläche und ein Abformwerkzeug zur Fertigung des Retroreflektors.

Unter Retroreflektor sollen optische Elemente verstanden werden, die in einem bestimmten Winkelbereich einfallendes Licht unabhängig vom exakten Einfallswinkel wieder zurück zur Lichtquelle zurücklenken. Gewisse Abweichungen des zurückreflektierten Strahles von der Einfallsrichtung sind dabei möglich und teilweise sogar erwünscht, wenn z.B. Lichtquelle und intendierter Rezipient der reflektierten Strahlung nicht in einer exakten Flucht vom Reflektor aus betrachtet sind.

Es sind verschiedene Arten von Retroreflektoren bekannt. Einen bekannten Typ von reflektierenden oder genauer gesagt retroreflektierenden Elementen stellen beispielsweise Folien mit eingebetteten Mikrokugeln vor einer spiegelnden Schicht dar. Im Allgemeinen einen deutlich höheren Retroreflektions- und damit Wirkungsgrad als solche Mikrokugel basierten Folien weisen reflektierende Elemente auf, die ein oder mehrere Cube-Corner-Elemente zur Retroreflektion umfassen. Eine solche Cube-Corner ("Würfelecke") besteht dabei aus drei jeweils im Wesentlichen senkrecht zueinanderstehenden Flächen und wird daher auch Tripel genannt. Ein entsprechender Retroreflektor umfasst dabei im Allgemeinen eine Vielzahl solcher Tripel, die regelmäßig also in einem Array angeordnet sind. Die regelmäßige Anordnung zur Bildung eines Fullcubes wird als Tripelarray bezeichnet.

Stehen dabei die drei Tripelflächen nicht exakt senkrecht zueinander, so wird die Richtung zumindest eines Teiles des reflektierten Lichtes von der Richtung des einfallenden Lichtes um einen gewissen Betrag abweichen, was aber für gewisse Anwendungen, wie Weitwinkelstrukturen im Straßenverkehr oder zur Lichtumlenkung, von Vorteil sein kann.

Für die Verwendung in Reflektorfolien wie beispielsweise in der US3810804 A (Anmelder: Rowland dev. Corp) beschrieben, bestehen die Tripel häufig aus Tetraederstrukturen, d.h. aus halben Würfeln, die entlang einer Diagonalen abgeschnitten sind. Solche Pyramidenstrukturen, haben den Nachteil, dass sie aufgrund von Totflächen, d.h. Flächen, deren reflektierte Strahlen nicht weiter reflektiert werden können einen maximalen Wirkungsgrad von ca. 66 % haben.

Sehr häufig sind auch Anordnungen, bei der die drei im Wesentlichen jeweils zueinander senkrechten Flächen im Wesentlichen quadratisch und von gleicher Größe sind. Sie bilden dann eine Ecke (also 3 in einem Punkt zusammenstoßende Flächen) eines Würfels. Ein solcher spezieller Tripel soll im Folgenden als Full Cube bezeichnet werden. Die Raumdiagonale dieses gedachten Würfels bildet die so genannte Tripelachse. Ist die Lichteintrittsfläche, auf die der Tripel beleuchtet wird, also die Aperturfläche senkrecht zur Tripelachse, so wird beim Full Cube bei Lichteinfall parallel zur Tripelachse ideal 100% des einfallenden Lichts in die Ausgangsrichtung zurückreflektiert, was einen großen Wirkungsgrad von mit diesen Tripeln ausgerüsteten Reflektoren zur Folge hat.

Sollte bisher ein Retroreflektor basierend auf Tripelspiegeln, insbesondere basierend auf Full Cubes auf einer gekrümmten Fläche aufgebracht werden, war die starre Struktur der Tripelspiegel eine Erschwernis. Um überhaupt Tripelspiegel anbringen zu können, mussten erhebliche Anstrengungen unternommen werden. Die DE 202 07 645 U1 (Anmelderin: IMOS Gubela GmbH) schlägt z. B. als Kräfteausgleichsschicht zwischen einem Tripelreflektor und einem Kabel ein zweiteiliges Klettband vor. Krümmungen mit zwei Krümmungsrichtungen, z. B. sphärische, toroidale, ellipoidische, parabolische oder hyperbolische Krümmungen oder Freiformflächen sind mit üblichen auf Tripelspiegeln basierenden Retroreflektoren und auch mit Reflektorfolien in der vollen Würfelgeometrie bisher nicht möglich. Retroreflektoren mit gekrümmten Oberflächen sind zudem aus der GB 918 015 A und der GB 1 426 230 A bekannt.

Es besteht also der Wunsch, auch Retroreflektoren, die Geometrien mit vollen Würfelflächen, also Full Cubes, und damit einen Reflektionswirkungsgrad nahe 1 haben, für gekrümmte oder gewölbte Flächen auszulegen.

Diese Aufgabe wird durch einen Retroreflektor nach Anspruch 1 gelöst. Der erfindungsgemäße Retroreflektor kann beispielsweise mit einem Abformwerkzeug nach Anspruch 9 mittels Spritzguss hergestellt werden.

Ein erfindungsgemäßer Retroreflektor weist eine Anordnung von Tripeln mit jeweils drei im Wesentlichen senkrecht aufeinander stehenden Seitenflächen auf. Die Tripel sind auf einer gekrümmten oder gewölbten Oberfläche angeordnet.

Als im Wesentlichen senkrecht aufeinander stehend werden Seitenflächen bezeichnet, die zueinander einen Winkel zwischen 85° und 95° vorzugsweise zwischen 89° und 91°, besonders bevorzugt zwischen 89° 58' und 90° 2' einschließen. Ziel ist es, dass die Seitenflächen eins Tripels trotz der Krümmung oder Wölbung der Oberfläche einen Winkel von 90° Grad bilden. Abweichungen vom rechten Winkel sollen nur dann auftreten, wenn sie gezielt geplant wurden, beispielsweise für eine Weitwinkelstruktur. Es versteht sich, dass auch fertigungsbedingte Toleranzen zu einer Abweichung vom exakten rechten Winkel führen können.

Die Krümmung der Oberfläche führt dazu, dass ein einzelnes Würfelelement entlang eines Vektors, zum Beispiel entlang eines Vektors in Richtung der Würfeldiagonale, von seinem Platz, den es bei ebener Anordnung im Array hätte, versetzt ist. Durch diesen Versatz entstehen beim Übergang zu benachbarten Tripeln Unebenheiten bzw. Schwellen. Erfindungsgemäß wird vorgeschlagen, eine Anpassung der Geometrie des Tripelarrays an die gekrümmte Oberfläche zum Ausgleich der Schwellen vorzunehmen, indem die Seitenflächen eines Tripels verlängert werden. Seitenflächen eines Tripels sind Grenzflächen zwischen einem mit festem Material gefüllten Volumen und einem Volumen, in dem festes Material fehlt, also ausgespart ist. Die Verlängerung einer Seitenfläche kann also zwei alternative Auswirkungen haben. Erstens kann zusätzliches Material hinter der Verlängerung übrigbleiben. Zweitens kann Material, das in einer flachen retroreflektierenden Anordnung aus Tripeln vorhanden wäre, fehlen. Die Verlängerungen der Seitenflächen ragen erfindungsgemäß in benachbarte Tripel hinein. Durch das Hineinragen der Verlängerung in benachbarte Tripel sind dort Fugen gebildet, die die Unebenheit ausgleichen. Die Fugen können die Gestalt einer mit Material gefüllten Ausbuchtung oder einer Einkerbung, in der Material fehlt, annehmen. Durch diese Vorgehensweise ist die Winkeltreue der Tripel auch bei gekrümmten Oberflächen gewährleistet. Die effizienteste Art, einen erfindungsgemäßen Retroreflektor herzustellen ist das Kunststoffspritzgussverfahren, das Prägen von Folien sowie der 3d-Druck. Geeignete Materialen sind Kunststoffe, die bei sichtbarem Licht transparent sind, wie Polymethylmethacrylat (PMMA) oder Polycarbonat (PC). Für das Abformen in Kunststoff wird ein Abformwerkzeug benötigt.

Eine bevorzugte Möglichkeit zur Herstellung eines geeigneten Abformwerkzeugs bietet das Mikroschnitt-Verfahren. Als Schneidewerkzeug kann beispielsweise eine Diamantnadel auf einer mehrachsigen Maschine dienen. Beim Mikroschneiden wird jeder Tripel einzeln aus dem Vollen bearbeitet. Die Bearbeitung findet aus unterschiedlichen Richtungen statt. Mit anderen Worten wird jeder einzelne Tripel aus dem Vollen herausgeschnitzt, so wie man mit einem Stemmeisen Material aus einem weichen Körper herausstemmt.

Aufgrund der einzelnen Bearbeitung jedes Tripels ist das Mikroschnittverfahren allerdings sehr zeitaufwändig, sodass es wirtschaftlich ist, wenn es zur Herstellung eines Masters, also eines Abformwerkzeugs angewendet wird. Die Urform des Abformwerkzeugs und damit auch das Abformwerkzeug selbst ist bevorzugt aus einem der Metalle Aluminium, Kupfer, Gold, Blei oder einer Nickellegierung mit Kupfer und Zink (Neusilber). Besonders geeignet für die Diamantbearbeitung und zur Herstellung optischer Formeinsätze ist Nickel-Phosphor.

Ein erfindungsgemäßes Abformwerkzeug weist eine regelmäßige Anordnung von Tripeln mit jeweils drei im Wesentlichen senkrecht aufeinander stehenden Seitenflächen auf. Erfindungsgemäß werden beim Mikroschneiden Krümmungen der Oberfläche so ausgeglichen, dass die Seitenflächen eines Tripels aus der Urform herausgeschnitten werden, ohne bei der Bearbeitung auf Material Rücksicht zu nehmen, das aufgrund der Krümmung der Oberfläche, bzw. eines daraus folgenden Versatzes zwischen zwei Tripeln einer Bearbeitung im Wege steht. Der aus der Krümmung folgende Versatz zwischen zwei benachbarten Tripel kann eine Überschneidung der Tripel führen. Dies führt dazu, dass bei der Bearbeitung der Seitenfläche eines ersten Tripels Material eines benachbarten zweiten Tripels, insbesondere Material in einem Überschneidungsbereich des ersten mit dem zweiten Tripels mit entfernt wird. Dadurch wird erfindungsgemäß die Seitenfläche des ersten Tripels in den zweiten Tripel hinein verlängert.

Eine Krümmung oder Wölbung der Oberfläche ist also im Abformwerkzeug derart ausgeglichen, dass einzelne Tripel Seitenflächen mit mindestens einer Verlängerung aufweisen, wobei sich die Verlängerung entlang einer Seitenfläche eines angrenzenden Tripels diese ausgehend von einer rechteckigen und vorzugsweise quadratischen Grundform verkleinernd erstreckt und in der Seitenfläche des angrenzenden Tripels eine Fuge in Form einer Einkerbung bildet.

Aus dem Master können mit Hilfe galvanischer Abformung weitere Abformwerkzeuge gewonnen werden. Die weiteren Abformwerkzeuge sind in diesem Fall ein Negativ des Masters und die Retroreflektoren nehmen wieder die ursprüngliche Form des Masters an. Eine konvexe Krümmung der Oberfläche des ursprünglichen Masters bleibt konvex, und eine konkave Krümmung des ursprünglichen Masters bleibt konkav. Auch die Geometrie zum Ausgleich der Krümmung bleibt bestehen. Einzelne Tripel, die im Master Seitenflächen mit Verlängerungen oder Einkerbungen aufweisen haben diese auch im Retroreflektor. Die Verlängerungen, die sich im Master entlang der Seitenflächen angrenzender Tripel erstrecken und in den Seitenflächen der angrenzenden Tripel Einkerbungen bilden, erstrecken sich auch im Retroreflektor entlang der Seitenflächen angrenzender Tripel und bilden dort Einkerbungen.

Der Master kann auch direkt verwendet werden, um Retroreflektoren im Spritzgussverfahren oder Abprägungen in Folie herzustellen. Die Retroreflektoren sind dabei ein Negativ des erfindungsgemäßen Abformwerkzeugs. Als Negativ sind Formen zu verstehen, bei denen Volumenbereiche, die in der positiven Form, wie dem Master mit fester Materie gefüllt sind ausgespart sind und in der positiven Form ausgesparte Volumenbereiche mit fester Materie ausgefüllt sind. Eine konvexe Krümmung der Oberfläche des ursprünglichen Masters wird konkav und eine konkave Krümmung des ursprünglichen Masters wird konvex. Die Verlängerungen der Seitenflächen bleiben bestehen. Die Einkerbungen werden im Negativ jedoch mit Material gefüllt. Einkerbungen im Master bilden in der Negativform des Retroreflektors Ausbuchtungen. Die Ausbuchtungen sind stufenförmig. Mit anderen Worten: die Ausbuchtungen ragen wie ein Balkon aus den Seitenflächen hervor. Eine Krümmung oder Wölbung der Oberfläche ist also derart ausgeglichen, dass einzelne Tripel Seitenflächen mit mindestens eine Verlängerung aufweisen, wobei sich die Verlängerung entlang einer Seitenfläche eines angrenzenden Tripels erstreckt und in einer Seitenfläche eines angrenzenden Tripels eine Ausbuchtung bildet.

Die nachfolgend beschriebenen Weiterbildungen und Definitionen finden sowohl auf das Abformwerkzeug als auch auf erfindungsgemäße Retroreflektoren Anwendung:
Gemäß einer vorteilhaften Weiterbildung der Erfindung liegt die Verlängerung einer Seitenfläche in einer von der jeweils zugeordneten Seitenfläche aufgespannten Ebene. Zur Verdeutlichung wird auf die aus der Kristallographie üblichen Millerschen Indizes Bezug genommen. Die Millerschen Indices eignen sich besonders für die Darstellung der hier gezeigten Würfelstrukturen. Die Millerschen Indizes werden wie folgt gebildet: Man bestimmt die Schnittpunkte der Würfelebene mit den drei Koordinatenachsen, kürzt gemeinsame Faktoren, bildet die Kehrwerte und multipliziert mit dem kleinsten gemeinsamen Vielfachen der Nenner, so dass sich drei ganze, teilerfremde Zahlen ergeben. Die erste Seitenfläche des ersten Tripels liegt beispielsweise in der (100)- Ebene, die zweite Seitenfläche des ersten Tripels in der (010)-Ebene und die dritte Seitenfläche in der (001)-Ebene. Wenn an der ersten Seitenfläche eine Verlängerung ausgebildet ist, liegt diese Verlängerung vorteilhafterweise ebenfalls in der (100)-Ebene. Die Verlängerung und die Seitenfläche schließen also einen Winkel von 180° ein. Es gibt keinen Knick zwischen der Verlängerung und der zugeordneten Seitenfläche. Die Verlängerung hat außerdem keinen Punkt, der aus der (100)-Ebene heraus ragt. Insbesondere ist die (100)-Verlängerung der ersten (100) Seitenfläche nicht in x-Richtung ausgedehnt, bzw. biegt sich nicht in die x-Richtung hinein. Dies hat den Vorteil, dass Licht, das in einem aus dem erfindungsgemäßen Abformwerkzeug gefertigten Retroreflektor auf eine solche Verlängerung trifft, mit einer gewissen Wahrscheinlichkeit zwei weitere Reflektionsflächen in seinem Strahlengang hat. Weil die Verlängerung mit der Seitenfläche in einer Ebene liegt, stehen die möglichen weiteren Reflektionsflächen im Wesentlichen senkrecht auf der Verlängerung. Durch diese Gestaltung kann erreicht werden, dass zumindest ein Teil der Fläche der Verlängerung der Retroreflektion zur Verfügung steht. Die Verlängerung ist also keine Totfläche. Obwohl sich gewisse Verluste auf Grund der Krümmung nicht vermeiden lassen hat der Retroreflektor einen Retroreflektionswirkungsgrad von über 95 % bis hin zu 99 %. Das bedeutet zwischen 95 % und 99 %der Beleuchtungsstärke der einfallenden Strahlung werden wieder in einer dem einfallenden Strahl entgegengesetzte Richtung retroreflektiert.

Gemäß einem weiteren Aspekt der Erfindung ist eine Kantenlänge der Seitenfläche um mindestens den Faktor 5, bevorzugt um den Faktor 10 größer als eine Breite der Verlängerung. Eine Definition der Kantenlänge wird weiter unten gegeben. Als Breite der Verlängerung ist das Maß einer Linie zu verstehen, an der die Verlängerung mit der ihr zugeordneten Seitenfläche zusammenhängt. Als Bezugskante, mit der die Breite der Verlängerung verglichen wird, kann ebenfalls die Kante der Seitenfläche gewählt werden, in deren Verlängerung die Breite der Verlängerung gemessen wird.

Vorzugsweise beträgt eine Länge der Verlängerung zwischen 50 % und 100 % der Kantenlänge der benachbarten Seitenfläche, entlang der sich die Verlängerung erstreckt. Als Länge der Verlängerung kann die Abmessung einer Linie verstanden werden, die senkrechte auf der Linie zur Messung der Breite steht und sich von dem Punkt an dem die Verlängerung mit der ihm zugeordneten Seitenfläche zusammenhängt bis zum Ende der Verlängerung erstreckt. Das heißt, die Verlängerung folgt der benachbarten Seitenfläche auf nahezu ihrer gesamten Länge. Auch dies trägt dazu bei, Verluste auf Grund von Totflächen zu minimieren. Außerdem werden für den Spritzguss hinderliche Hinterschnitte vermieden, wenn die Verlängerung der Seitfläche des benachbarten Tripels auf ihrer gesamten Länge folgt.

Vorteilhafterweise wird eine Schlüsselweite der Tripel möglichst klein gewählt. Die Schlüsselweite ist der regelmäßige Abstand zwischen zwei weiter unten definierten Apices. Durch das Mikroschneiden sind Schlüsselweiten bis zu 200 µm erreichbar. Insbesondere sollte die Schlüsselweite klein sein im Verhältnis zu einem Krümmungsradius der Oberfläche. Bevorzugt ist der Krümmungsradius der Oberfläche um mindestens den Faktor 50, besonders bevorzugt um mindestens den Faktor 150 und höchstens den Faktor 10000 größer als die Schlüsselweite der Tripel. Bei nicht sphärisch gekrümmten Flachen ist das Minimum also der kleinste aller lokalen Krümmungsradien maßgeblich. Je größer das Verhältnis zwischen Krümmungsradius und Schlüsselweite ist, desto geringer ist der relative Versatz eines Tripels zu seiner regulären Position in einem flachen Array. Gemäß einem weiteren Aspekt der Erfindung ist die Verlängerung an einem Eckbereich der Seitenfläche angeordnet. Daraus ergibt sich, dass die Seitenfläche eine rechteckige Grundform hat, an der sich die Verlängerung mit einer pfannengriffartigen Gestalt anschließt. Mit anderen Worten, die Seitenfläche hat mit der ihr zugeordneten Verlängerung eine ähnliche Form wie der US-Bundesstaat Oklahoma auf einer Landkarte.

Wie oben beschrieben lassen sich den Seitenflächen eines Tripels beispielsweise mit Hilfe der Millerschen Indices Ebenen zuordnen. Als Apex kann ein Schnittpunkt dieser drei Ebenen definiert werden. Z. B. schneiden sich die (100) Ebene, die (010) Ebene und die (001) Ebene im Punkt (1,1,1) des Ortsraums. Der Punkt (1,1,1) bildet den Apex des Tripels, dessen Seitenflächen in den (100) (010) und (001) Ebenen liegt. Mit anderen Worten schneiden sich die Seitenflächen, bzw. eine gedachte Verlängerung der Seitenflächen über eine Einkerbung hinweg im Apex. Durch den Apex lässt sich eine Symmetrieachse des Tripels legen. Die Symmetrieachse hat zu allen Ebenen der Seitenflächen den gleichen Winkel.

Mit dem eben definierten Apex können nun auch die Kantenlängen eines Tripels angegeben werden. Bei einem Schnitt von nur zwei den Seitenflächen des Tripels zugeordneten Ebenen ergibt sich eine Schnittgerade. Jedem Tripel können drei solcher Schnittgeraden zugeordnet werden. Als eine Kantenlänge eines Tripels sei der Abstand des Apex von einem Schnittpunkt der Schnittgeraden mit einer Ebene, die sich der Seitenfläche eines benachbarten Tripels zuordnen lässt, definiert. Dabei schneidet die Schnittgerade näherungsweise senkrecht die Ebene der Seitenfläche des Nachbartripels. Weil jeder Tripel drei Schnittgeraden hat, können jedem Tripel auch drei Kantenlängen zugewiesen werden.

Anders gesagt ist die Kantenlänge die Länge, die die Kante eines Würfelelements ohne Berücksichtigung der Verlängerungen und Fugen hätte.

Sollen nur kleine Winkel des reflektierten Strahls zum einfallenden Strahl beobachtet werden, ist es von Vorteil, wenn alle drei Kantenlängen eines Tripels gleich groß sind. Bei Weitwinkelanwendungen (siehe z.B. DE 102 16 579 A1 Anmelder: Hans-Erich Gubela Senior) können aber auch unterschiedliche Kantenlängen erwünscht sein. Bei diesen Weitwinkelanwendungen mit unterschiedlichen Kantenlängen weicht die Symmetrieachse von der Raumdiagonale des Tripels ab.

Je nachdem, ob eine Weitwinkelanordnung oder nur ein enger Winkelbereich des reflektierten Strahls erwünscht ist, kann eine unterschiedliche Ausrichtung der Symmetrieachsen der Tripel gewählt werden. Für einen engen Winkelbereich ist es vorteilhaft, wenn die Symmetrieachsen aller Tripel möglichst parallel zueinander verlaufen. Für eine Weitwinkelanordnung ist es vorteilhaft, wenn die Symmetrieachsen der Tripel der Krümmung bzw. der Wölbung der Oberfläche folgen. Dies kann beispielsweise erreicht werden, wenn die Symmetrieachse entlang eines lokal definierten Normalenvektors der Oberfläche ausgerichtet ist. Selbstverständlich sind auch andere Verkippungen der Tripel oder eine bereichsweise Kombination der beiden Varianten denkbar. D.h. in einem ersten Bereich des Abformwerkzeugs oder des Retroreflektors, beispielweise mit einem betragsmäßig kleineren Krümmungsradius, folgen die Symmetrieachsen der gekrümmten Oberfläche und in einem zweiten Bereich des Abformwerkzeugs oder des Retroreflektors, beispielsweise mit einem betragsmäßig größeren Krümmungsradius sind die Symmetrieachsen parallel zueinander.

Es sind auch andere Möglichkeiten zur Ausführung der Erfindung denkbar. Es ist z.B. vorstellbar, das Abformwerkzeug oder den Retroreflektor selbst in der erfindungsgemäßen Geometrie mit einem 3d-Drucker zu drucken. Ebenso wenig beschränkt sich die Erfindung nur auf sphärisch gekrümmte Flächen, sondern lässt sich auf gekrümmte Flächen anderer Formen anwenden. Denkbar sind toroidale, ellipoidische, parabolische oder hyperbolische Krümmungen oder Krümmungen von Freiformflächen z.B. aus Splines oder NURBS gebildeten Rotationskörpern.

Die Erfindung soll durch die folgenden Figuren ohne Beschränkung des Schutzumfangs näher erläutert werden.

Es zeigen:
- Figur 1: ein Profil eines erfindungsgemäßen Abformwerkzeugs,
- Figur 2: einen Ausschnitt aus Figur 1 in starker Vergrößerung,
- Figur 3: einen weiteren Ausschnitt aus Figur 1,
- Figur 4: einen Schnitt entlang einer Achse A-A durch Figur 1,
- Figur 5: einen vergrößerten Ausschnitt aus Figur 4,
- Figur 6: einen Schnitt entlang der Achse B-B durch Figur 1,
- Figur 7: einen vergrößerten Ausschnitt aus Figur 6,
- Figur 8: einen Ausschnitt eines erfindungsgemäßen Retroreflektors
- Figur 9: eine schematische 2 d Darstellung eines erfindungsgemäßen Retroreflektors
- Figur 10: eine schematische 2 d Darstellung eines anderen erfindungsgemäßen Retroreflektors.

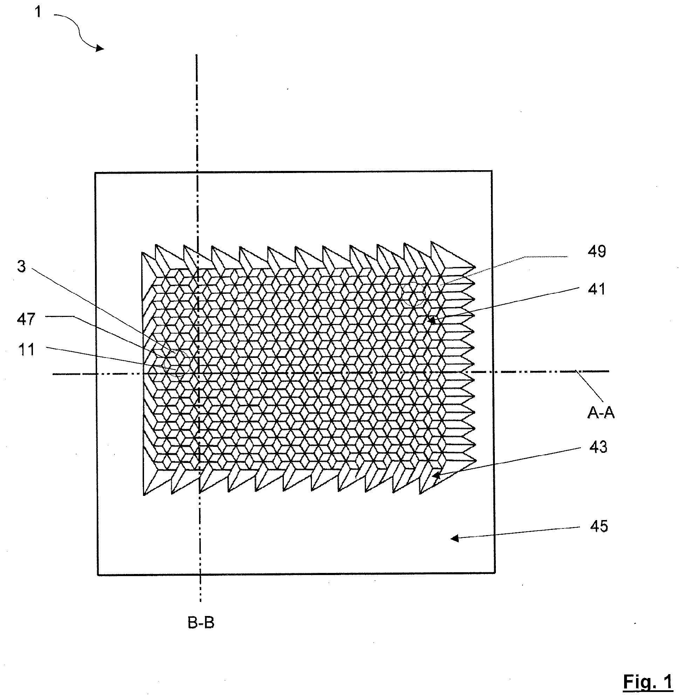

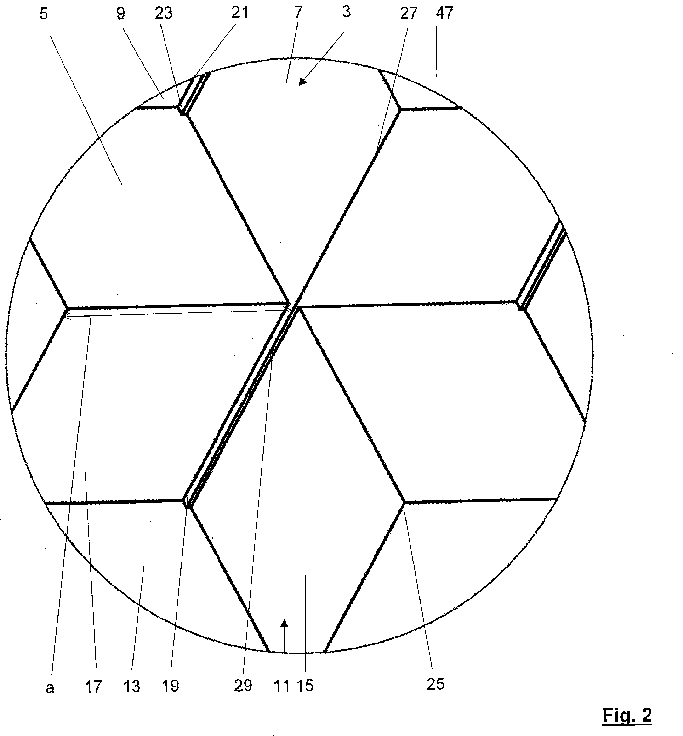

**Figur 1** zeigt ein Profil eines erfindungsgemäßen Abformwerkzeugs 1 zur Abformung eines erfindungsgemäßen Tripelarrays als Full-Cube-Retroreflektor. In einem Zentralbereich 41 sind regelmäßig angeordnete Tripel 3, 11 dargestellt. Die Tripel sind würfelförmig ausgebildet. Alle Kantenlängen a (dargestellt in Figur 2) der Tripel 3,11 sind gleich groß. Die Tripel sind auf einer gekrümmten Oberfläche angeordnet. Der Krümmungsradius der Oberfläche ist so groß gewählt, dass die Effekte der Krümmung in der Darstellung der Figur 1 nicht direkt sichtbar sind. Wie später dargestellt wirkt sich die Krümmung trotzdem auf die Winkelverhältnisse der einzelnen Tripel 3, 11 aus. Ein Anschnittbereich 43 ist um den Zentralbereich des Abformwerkzeugs 1 herum angeordnet. Im Anschnittbereich 43 sind die Spuren erkennbar, die ein Schneidewerkzeug beim Mikroschneiden hinterlassen hat. Die Richtung des Schneidens ist sichtbar. Es ist auch erkennbar, dass jede Seitenfläche 5, 7, 9, 11, 13, 15 aus einer anderen Richtung aus dem Vollen bearbeitet ist. Um den Anschnittbereich 43 herum befindet sich der Grundkörper 45 des Abformwerkzeugs 1.

**Figur 2** zeigt einen vergrößerten Ausschnitt 47 aus Figur 1 mit einem ersten Tripel 3 und einem benachbarten zweiten Tripel 11. Dem ersten Tripel 3 sind die Seitenflächen 5, 7, 9 zugeordnet. Die Seitenflächen 5, 7, 9 stehen senkrecht aufeinander. Die Seitenflächen 7, 9 weisen Einkerbungen 21 auf. Die Einkerbungen 21 verlaufen entlang eines Randbereichs 31 der Seitenflächen 7, 9 und erstrecken sich über deren volle Kantenlänge a. Dem zweiten Tripel 11 sind die Seitenflächen 13, 15, 17 zugeordnet. Die Seitenfläche 7 des ersten Tripels 3 bildet eine Verlängerung 19 aus. Die Verlängerung 19 liegt in der gleichen Ebene wie die Seitenfläche 7. Die Verlängerung 19 ist zugleich eine Einkerbung der Seitenfläche 17 des zweiten Tripels 11. Um die dreidimensionale Struktur zu verdeutlichen sind Apex 23 und Tiefpunkt 25 der Struktur gekennzeichnet. Der Apex 23 ist mit dem Tiefpunkt 25 über eine Innenkante 27 und eine Außenkante 29 verbunden. Eine Innenkante 27 ist eine Kante, die zwei benachbarte Tripel 3, 11 begrenzt, eine Außenkante 29 begrenzet zwei Seitenflächen 5, 7, 9 innerhalb eines Tripels 3.

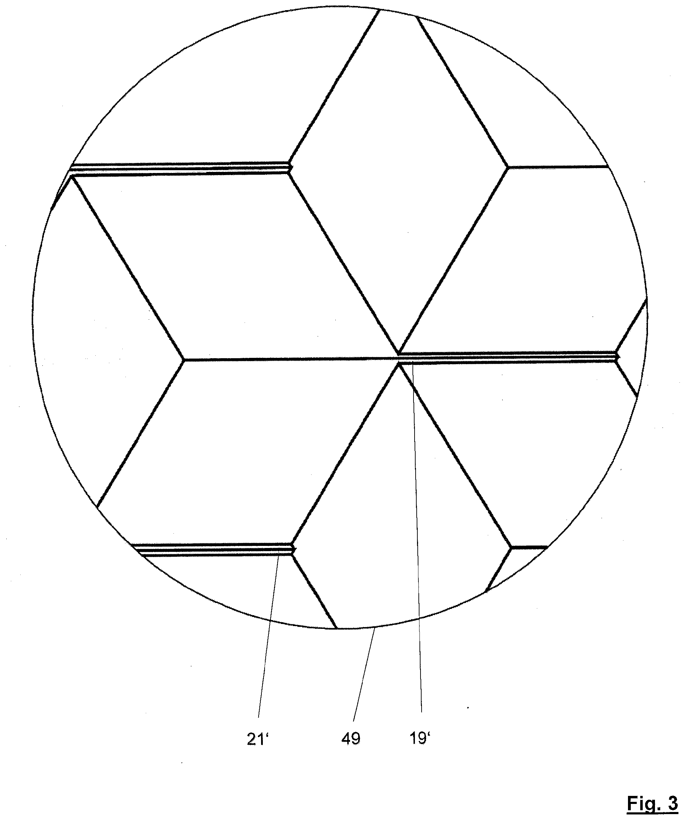

**Figur 3** zeigt einen anderen Ausschnitt 49 aus Figur 1. Der Vergleich zwischen Figur 2 und Figur 3 macht die Effekte der Krümmung der Oberfläche sichtbar. Die Verlängerungen 19' und Einkerbungen 21' weisen in eine Richtung senkrecht zu den Verlängerungen und Einkerbungen aus Figur 2.

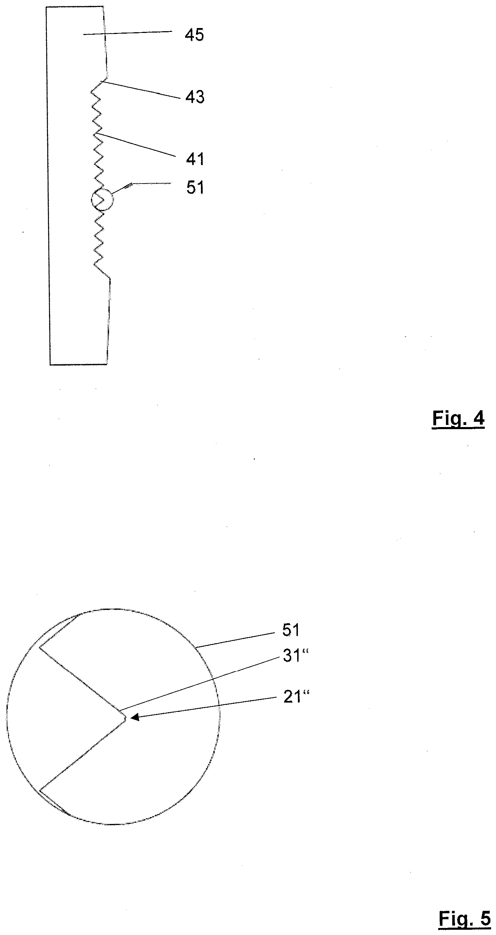

Die **Figuren 4 und 5** stellen die Einkerbungen nochmals aus einer anderen Perspektive dar.

**Figur 4** zeigt einen Schnitt durch das Abformwerkzeug 1 entlang der Achse A-A (siehe Figur 1). Der Zentralbereich 41, der Anschnittbereich 43 und der Grundkörper 45 sind deutlich erkennbar.

**Figur 5** zeigt einen Vergrößerungsbereich 51 aus Figur 4. Es ist eine Einkerbung 21" im Randbereich 31" zweier Seitenflächen, also einer Ecke erkennbar.

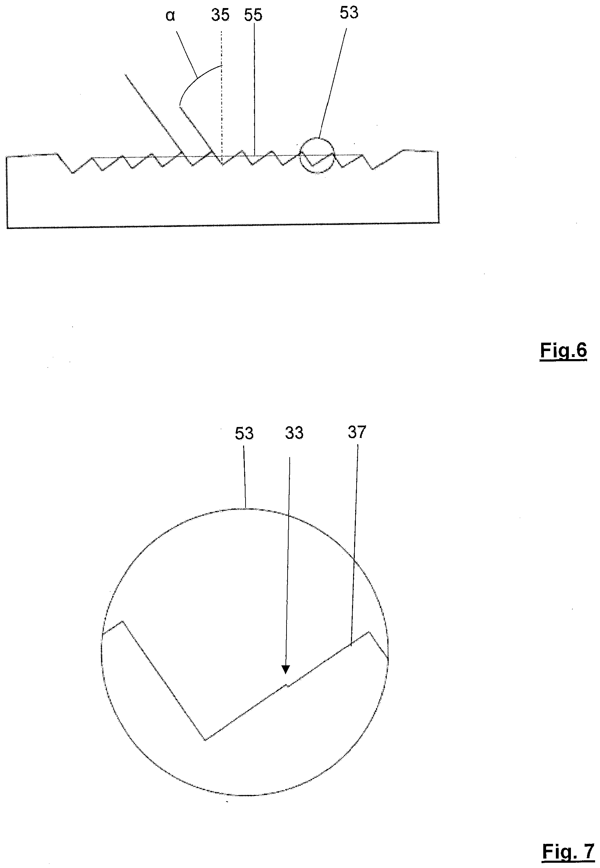

In **Figur 6** ist ein Schnitt entlang der Achse B - B aus Figur 1 dargestellt. Die Krümmung der Fläche ist daran erkennbar, dass die Apices der mittleren Tripel über eine gepunktet eingezeichnete Verbindungsgerade 55 der Apices der äußeren Tripel herausstehen. Es ist ein Normalenvektor 35 der gekrümmten Fläche eingezeichnet. Die Seitenflächen schließen zum Normalenvektor den Winkel α von 35,26° ein. Dieser Winkel entspricht dem kleinen Winkel, die die Raumdiagonale im Würfel zu den Seitenflächen einschließt. Der Bereich 53 ist in **Figur 7** vergrößert dargestellt.

In **Figur 7** wird ein weiteres Artefakt der Krümmung sichtbar. Bei ebenen Flächen verlaufen alle Kanten entlang einer Linie. Durch die Krümmung macht die Kante 37 einen Sprung 33. Die Kante 37 verläuft nach dem Sprung 33 zwar parallel zum ursprünglichen Verlauf weiter, sie ist aber versetzt zu ihm.

Der Sprung 33 befindet sich an einem Übergang, an dem die Kante 37 von einer Innenkante 27 (siehe Figur 2) zu einer Außenkante 29 (siehe Figur 2) wird. Der Sprung 33 gleicht den durch die Krümmung verursachten Versatz aus. An der Stelle des Sprungs 33 schneidet eine Innenkante 27 eine Seitenfläche 7 mit einer Verlängerung 19, 19'. Eine Außenkante schneidet eine Seitenfläche 15 mit Einkerbung 21, 21', 21" (siehe Figuren 2 und 3).

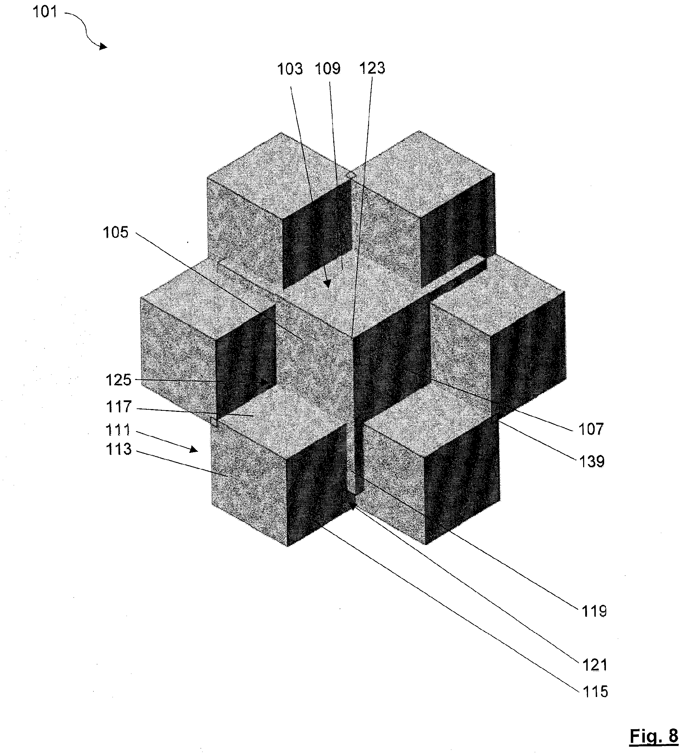

**Figur 8** zeigt eine übertriebene schematische Darstellung eines erfindungsgemäßen Retroreflektors 101. Der Retroreflektor 101 kann als Negativform eines oben beschriebenen und in den Figuren 1 bis 7 dargestellten Abformwerkzeugs 1 aufgefasst werden. Der erste Tripel 103 ist gegenüber dem zweiten Tripel 111 und den übrigen Tripeln ohne Bezugszeichen aus der Zeichenebene heraus versetzt, d.h. die Oberfläche, in der alle Apices, z.B. der Apex 123 liegen, ist konvex gewölbt. Die Seitenfläche 105 des Retroreflektors entspricht der Seitenfläche 5 eines Abformwerkzeugs aus den vorherigen Figuren, die Seitenfläche 107 entspricht der Seitenfläche 7 eines Abformwerkzeugs, usw. Die Seitenflächen 105, 107, 109 des ersten Tripels 103 stehen senkrecht aufeinander. Ebenso die Seitenflächen 113, 115, 117 des zweiten Tripels. Alle drei Seitenflächen 105, 107, 109 des ersten Tripels 103 weisen Verlängerungen 119 auf. Die Verlängerungen 119 ragen in die Seitenflächen 115 benachbarter Tripel 111 hinein. Dort bilden die Verlängerungen 119 stufenartige Ausbuchtungen 121. Die Verlängerung 119 liegt in der gleichen Ebene wie die der Verlängerung zugeordnete Seitenfläche 105.

In **Figur** 8 ist ein weiterer Effekt sichtbar, der bei gekrümmten Oberflächen auftreten kann, wenn sich die Apices zweier benachbarter Tripel zufällig auf gleicher Höhe befinden. In einem Überlappungsbereich 139 können sich die Seitenflächen zweier benachbarter Tripel überlappen. D.h. die beiden an den Überlappungsbereich 139 angrenzenden Seitenflächen liegen in einer Ebene und bilden eine gemeinsame Reflektionsfläche.

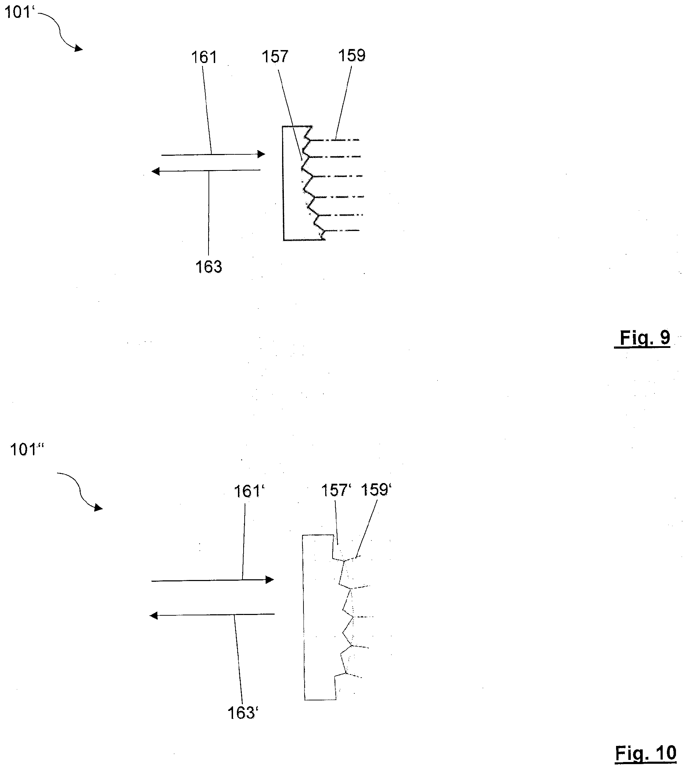

**Figur 9** zeigt eine übertriebene schematische 2-dimensionale Darstellung eines erfindungsgemäßen Retroreflektors 101' auf einer sphärisch konkav gewölbten Oberfläche. Die Wölbung 157 ist gepunktet dargestellt. Alle Symmetrieachsen 159 der Tripel verlaufen in diesem Beispiel parallel zueinander. Die Fugen zum Ausgleich der Wölbung 157 sind in der 2-dimensionalen Darstellung nicht sichtbar. Der Lichtweg des einfallenden Lichts 161 und des reflektierten Lichtstrahls 163 sind durch Pfeile symbolisiert.

**Figur 10** zeigt eine übertriebene schematische 2-dimensionale Darstellung eines erfindungsgemäßen Retroreflektors 101" auf einer sphärisch konvex gewölbten Oberfläche. Alle Symmetrieachsen 159' der Tripel verlaufen in diesem Beispiel radial, also parallel zu einem Normalenvektor der Wölbung 157'. Die Fugen zum Ausgleich der Wölbung 157' sind in der 2-dimensionalen Darstellung nicht sichtbar. Der Lichtweg des einfallenden Lichts 161' und des reflektierten Lichtstrahls 163' sind durch Pfeile symbolisiert.

### Bezugszeichenliste:

| | |
|---|---|
| 1 | Abformwerkzeug |
| 3 | Erstes Tripel |
| 5 | Erste Seitenfläche des ersten Tripels |
| 7 | Zweite Seitenfläche des ersten Tripels |
| 9 | Dritte Seitenfläche des ersten Tripels |
| 11 | Zweites Tripel |
| 13 | Erste Seitenfläche des zweiten Tripels |
| 15 | Zweite Seitenfläche des zweiten Tripels |
| 17 | Dritte Seitenfläche des zweiten Tripels |
| 19, 19' | Verlängerung |
| 21, 21', 21" | Einkerbung |
| 23 | Apex |
| 25 | Tiefpunkt |
| 27 | Innenkante |
| 29 | Außenkante |
| 31, 31" | Randbereich |
| 33 | Sprung |
| 35 | Normalenvektor |
| 37 | Kante |
| 41 | Zentralbereich |
| 43 | Anschnittbereich |
| 45 | Grundkörper |
| 47 | Erster Ausschnitt |
| 49 | Zweiter Ausschnitt |
| 51 | Vergrößerungsbereich im Schnitt A-A |
| 53 | Vergrößerungsbereich im Schnitt B-B |
| 55 | Verbindungsgerade |
| 101, 101', 101" | Retroreflektor |
| 103 | Erstes Tripel |
| 105 | Erste Seitenfläche des ersten Tripels |
| 107 | Zweite Seitenfläche des ersten Tripels |
| 109 | Dritte Seitenfläche des ersten Tripels |
| 111 | Zweites Tripel |
| 113 | Erste Seitenfläche des zweiten Tripels |
| 115 | Zweite Seitenfläche des zweiten Tripels |
| 117 | Dritte Seitenfläche des zweiten Tripels |
| 119 | Verlängerung |
| 121 | Ausbuchtung |
| 123 | Apex |
| 125 | Tiefpunkt |
| 139 | Überlappungsbereich |
| 157, 157' | Wölbung |
| 159, 159' | Symmetrieachse |
| 161, 161' | einfallender Lichtstrahl |
| 163, 163' | reflektierter Lichtstrahl |
| A-A | Schnitt |
| B-B | Schnitt |
| α | Winkel |
| a | Kantenlänge |

## Patentansprüche

1. Retroreflektor (101, 101', 101") umfassend eine Anordnung von Tripeln (103, 111) mit jeweils drei im Wesentlichen senkrecht aufeinander stehenden Seitenflächen (105, 107, 109, 113, 115, 117), wobei die Tripel (103, 111) auf einer gekrümmten oder gewölbten Oberfläche angeordnet sind, **dadurch gekennzeichnet, dass** eine Krümmung oder Wölbung (157, 157') der Oberfläche derart ausgeglichen ist, dass einzelne Tripel (103) Seitenflächen (105, 107, 109) mit mindestens einer Verlängerung (119) aufweisen, wobei sich die Verlängerung entlang einer Seitenfläche (115) eines angrenzenden Tripels (111) diese ausgehend von einer rechteckigen und vorzugsweise quadratischen Grundform verkleinernd erstreckt und mit der Seitenfläche (115) des angrenzenden Tripels (111) eine Fuge bildet und dass die Fuge eine eine Kante der Seitenfläche (115) des angrenzenden Tripels (111) bildende Einkerbung ist.

2. Retroreflektor (101, 101', 101") umfassend eine Anordnung von Tripeln (103, 111) mit jeweils drei im Wesentlichen senkrecht aufeinander stehenden Seitenflächen (105, 107, 109, 113, 115, 117), wobei die Tripel (103, 111) auf einer gekrümmten oder gewölbten Oberfläche angeordnet sind, **dadurch gekennzeichnet, dass** eine Krümmung oder Wölbung (157, 157') der Oberfläche derart ausgeglichen ist, dass einzelne Tripel (103) Seitenflächen (105, 107, 109) mit mindestens einer Verlängerung (119) aufweisen, wobei sich die Verlängerung entlang einer Seitenfläche (115) eines angrenzenden Tripels (111) diese ausgehend von einer rechteckigen und vorzugsweise quadratischen Grundform verkleinernd erstreckt und mit der Seitenfläche (115) des angrenzenden Tripels (111) eine Fuge bildet und dass die Fuge eine aus der Seitenfläche (115) des angrenzenden Tripels (111) vorspringende stufenartige Ausbuchtung (121) ist.

3. Retroreflektor (101, 101', 101") nach Anspruch 2, **dadurch gekennzeichnet, dass** eine Struktur der Tripel (103, 111) ein Negativ der Struktur der Tripel eines Retroreflektors darstellt, der eine Anordnung von Tripeln (103, 111) umfasst mit jeweils drei im Wesentlichen senkrecht aufeinander stehenden Seitenflächen (105, 107, 109, 113, 115, 117), wobei die Tripel (103, 111) auf einer gekrümmten oder gewölbten Oberfläche angeordnet sind, wobei eine Krümmung oder Wölbung (157, 157') der Oberfläche derart ausgeglichen ist, dass einzelne Tripel (103) Seitenflächen (105, 107, 109) mit mindestens einer Verlängerung (119) aufweisen, wobei sich die Verlängerung entlang einer Seitenfläche (115) eines angrenzenden Tripels (111) diese ausgehend von einer rechteckigen und vorzugsweise quadratischen Grundform verkleinernd erstreckt und mit der Seitenfläche (115) des angrenzenden Tripels (111) eine Fuge bildet und wobei die Fuge eine eine Kante der Seitenfläche (115) des angrenzenden Tripels (111) bildende Einkerbung ist.

4. Retroreflektor (101, 101', 101") nach einem der Ansprüche 1 bis 3, **dadurch gekennzeichnet, dass** zumindest ein Teil der Verlängerungen (119) in einer von der jeweils zugeordneten Seitenfläche (105) aufgespannten Ebene liegt.

5. Retroreflektor (101, 101', 101") nach einem der Ansprüche 1 bis 4, **dadurch gekennzeichnet, dass** eine Breite der Verlängerung (119) um mindestens den Faktor 5 kleiner ist als eine Kantenlänge der Seitenfläche (105), wobei vorzugsweise eine Länge der Verlängerung (119) zwischen 50 % und 100 % der Kantenlänge der benachbarten Seitenfläche (115), entlang der sich die Verlängerung (119) erstreckt, beträgt.

6. Retroreflektor (101, 101', 101") nach einem der Ansprüche 1 bis 5, **dadurch gekennzeichnet, dass** die Verlängerung (119) an einem Eckbereich der Seitenfläche angeordnet ist, sodass sich vorzugsweise eine rechteckige Grundform der Seitenfläche ergibt, an die sich die Verlängerung in einer pfannengriffartigen Gestalt anschließt.

7. Retroreflektor (101, 101") nach einem der Ansprüche 1 bis 6, **dadurch gekennzeichnet, dass** sich die Ebenen, in denen drei Seitenflächen (105, 107, 109, 113, 115, 117) eines Tripels (103, 105) liegen, in einem Apex (123) schneiden, und durch den Apex (123) eine Symmetrieachse verläuft, die zu allen Ebenen, in denen die Seitenflächen (105, 107, 109, 113, 115, 117) des Tripels (103, 105) liegen, den selben Winkel einschließt, wobei die Symmetrieachsen aller Tripel (103, 105) zumindest in einem Bereich des Retroreflektors parallel zu einem lokalen Normalenvektor der gekrümmten oder gewölbten Oberfläche sind.

8. Retroreflektor (101, 101') nach einem der Ansprüche 1 bis 6, **dadurch gekennzeichnet, dass** sich die Ebenen, in denen drei Seitenflächen (105, 107, 109, 113, 115, 117) eines Tripels (103, 105) liegen, in einem Apex (123) schneiden, und durch den Apex (123) eine Symmetrieachse verläuft, die zu allen Seitenflächen (105, 107, 109, 113, 115, 117) des Tripels (103, 105) den selben Winkel einschließt, wobei die Symmetrieachsen aller Tripel (103, 105) zumindest in einem Bereich des Retroreflektors parallel zueinander sind.

9. Abformwerkzeug (1) zur Herstellung eines Retroreflektors nach einem der vorhergehenden Ansprüche, wobei das Abformwerkzeug (1) eine Anordnung von Tripeln (3,11) mit jeweils drei im Wesentlichen senkrecht aufeinander stehenden Seitenflächen (5, 7, 9, 13, 15, 17) umfasst,
wobei die Tripel (3,11) des Abformwerkzeugs (1) auf einer gekrümmten oder gewölbten Oberfläche angeordnet sind,
**dadurch gekennzeichnet, dass** eine Krümmung oder Wölbung der Oberfläche derart ausgeglichen ist, dass einzelne Tripel (3, 11) des Abformwerkzeugs (1) Seitenflächen (7, 9, 15, 17) mit mindestens einer Verlängerung (19, 19') aufweisen, wobei sich die Verlängerung (19, 19') entlang einer Seitenfläche (17) eines angrenzenden Tripels (3, 11) des Abformwerkzeugs (1) diese ausgehend von einer rechteckigen und vorzugsweise quadratischen Grundform verkleinernd erstreckt und mit der Seitenfläche (17) des angrenzenden Tripels (3, 11) des Abformwerkzeugs (1) eine Fuge in Form einer Einkerbung (21, 21', 21") bildet.

10. Abformwerkzeug (1) nach Anspruch 9, **dadurch gekennzeichnet, dass** zumindest ein Teil der Verlängerungen (19) in einer von der jeweils zugeordneten Seitenfläche (7) aufgespannten Ebene liegt.

11. Abformwerkzeug (1) nach einem der Ansprüche 9 oder 10, **dadurch gekennzeichnet, dass** sich die Ebenen, in denen drei Seitenflächen (5, 7, 9, 13, 15, 17) eines Tripels (3, 11) des Abformwerkzeugs (1) liegen, in einem Apex (23) schneiden, und durch den Apex (23) eine Symmetrieachse verläuft, die zu allen Ebenen, in denen die Seitenflächen (5, 7, 9, 13, 15, 17) des Tripels liegen den selben Winkel (a) einschließt, wobei die Symmetrieachsen aller Tripel zumindest in einem Bereich des Retroreflektors parallel zu einem lokalen Normalenvektor (35) der gekrümmten oder gewölbten Oberfläche sind.

12. Abformwerkzeug (1) nach einem der Ansprüche 9 oder 10, **dadurch gekennzeichnet, dass** sich die Ebenen, in denen drei Seitenflächen (5, 7, 9, 13, 15, 17) eines Tripels liegen, in einem Apex (23) schneiden, und durch den Apex (23) eine Symmetrieachse verläuft, die zu allen Seitenflächen des Tripels (3, 11) des Abformwerkzeugs (1) den selben Winkel (a) einschließt, wobei die Symmetrieachsen aller Tripel (3, 11) des Abformwerkzeugs (1) zumindest in einem Bereich des Retroreflektors parallel zueinander sind.

13. Verwendung eines Abformwerkzeugs (1) nach einem der Ansprüche 9 bis 12 zur Herstellung eines Retroreflektors (101, 101', 101") nach einem der Ansprüche 1 bis 8 oder zur Herstellung eines weiteren Abformwerkzeugs (1) mittels galvanischer Abformung.

14. Verfahren zur Herstellung eines Abformwerkzeugs (1) nach einem der Ansprüche 9 bis 12, wobei jeder Tripel (3, 11) des Abformwerkzeugs mittels Mikroschneidens einzeln aus dem Vollen einer Urform bearbeitet wird, wobei vorzugsweise eine Diamantnadel auf einer mehrachsigen Maschine als Schneidewerkzeug verwendet wird und wobei die Urform vorzugsweise aus Aluminium, Kupfer, Gold, Blei, einer Nickel-Kupfer-Zink-Legierung oder Nickel-Phosphor besteht, **dadurch gekennzeichnet, dass** beim Schneiden Fugen in Form von Einkerbungen und Verlängerungen von Seitenflächen auf Grund einer gekrümmten oder gewölbten Oberfläche entstehen.

## Claims

1. Retroreflector (101, 101', 101") comprising an arrangement of triples (103, 111), each having three side surfaces (105, 107, 109, 113, 115, 117) that stand essentially perpendicular on one another, wherein the triples (103, 111) are disposed on a curved or domed surface, **characterized in that** a curvature or dome (157, 157') of the surface is evened out in such a manner that individual triples (103) have side surfaces (105, 107, 109) having at least one extension (119), wherein the extension extends along a side surface (115) of an adjacent triple (111), reducing its size, proceeding from a rectangular and preferably square basic shape, and forms a joint with the side surface (115) of the adjacent triple (111) and that the joint is a notch that forms an edge of the side surface (115) of the adjacent triple (111) .

2. Retroreflector (101, 101', 101") comprising an arrangement of triples (103, 111), each having three side surfaces (105, 107, 109, 113, 115, 117) that stand essentially perpendicular on one another, wherein the triples (103, 111) are disposed on a curved or domed surface, **characterized in that** a curvature or dome (157, 157') of the surface is evened out in such a manner that individual triples (103) have side surfaces (105, 107, 109) having at least one extension (119), wherein the extension extends along a side surface (115) of an adjacent triple (111), reducing its size, proceeding from a rectangular and preferably square basic shape, and forms a joint with the side surface (115) of the adjacent triple (111) and that the joint is a step-type protrusion (121) that projects out of the side surface (115) of the adjacent triple (111).

3. Retroreflector (101, 101', 101'') according to claim 2, **characterized in that** a structure of the triples (103, 111) represent a negative of the structure of the triples of a retroreflector which has an arrangement of triples (103, 111), each having three side surfaces (105, 107, 109, 113, 115, 117) that stand essentially perpendicular on one another, wherein the triples (103, 111) are disposed on a curved or domed surface, wherein a curvature or dome (157, 157') of the surface is evened out in such a manner that individual triples (103) have side surfaces (105, 107, 109) having at least one extension (119), wherein the extension extends along a side surface (115) of an adjacent triple (111), reducing its size, proceeding from a rectangular and preferably square basic shape, and forms a joint with the side surface (115) of the adjacent triple (111) and wherein the joint is a notch that forms an edge of the side surface (115) of the adjacent triple (111).

4. Retroreflector (101, 101', 101") according to one of claims 1 to 3, **characterized in that** at least part of the extensions (119) lies in a plane spanned by the respective related side surface (105) .

5. Retroreflector (101, 101', 101") according to one of claims 1 to 4, **characterized in that** a width of the extension (119) is smaller by at least a factor of 5 than an edge length of the side surface (105), wherein preferably, a length of the extension (119) amounts to between 50 % and 100 % of the edge length of the adjacent side surface (115) along which the extension (119) extends.

6. Retroreflector (101, 101', 101") according to one of claims 1 to 5, **characterized in that** the extension (119) is disposed in a corner region of the side surface, so that preferably, a rectangular basic shape of the surface occurs, which is followed by the extension, in a panhandle-type shape.

7. Retroreflector (101, 101") according to one of claims 1 to 6, **characterized in that** the planes in which three side surfaces (105, 107, 109, 113, 115, 117) of a triple (103, 105) lie intersect in an apex (123), and that an axis of symmetry runs through the apex (123), which axis encloses the same angle relative to all the planes in which the side surfaces (105, 107, 109, 113, 115, 117) of the triple (103, 105) lie, wherein the axes of symmetry of all the triples (103, 105) are parallel to a local normal line vector of the curved or domed surface, at least in a region of the retroreflector.

8. Retroreflector (101, 101') according to one of claims 1 to 6, **characterized in that** the planes in which three side surfaces (105, 107, 109, 113, 115, 117) of a triple (103, 105) lie intersect in an apex (123), and that an axis of symmetry runs through the apex (123), which axis encloses the same angle relative to all the side surfaces (105, 107, 109, 113, 115, 117) of the triple (103, 105), wherein the axes of symmetry of all the triples (103, 105) are parallel to one another at least in a region of the retroreflector.

9. Forming die (1) for the production of a retroreflector according to one of the preceding claims, wherein the forming die (1) comprises an arrangement of triples (3,11), each having at least three side surfaces (5, 7, 9, 13, 15, 17) that stand essentially perpendicular on one another,
wherein the triples (3,11) of the forming die are disposed on a curved or domed surface,
**characterized in that** a curvature or dome of the surface is evened out in such a manner that individual triples (3, 11) of the forming die have side surfaces (7, 9, 15, 17) having at least one extension (19, 19'), wherein the extension (19, 19') extends along a side surface (17) of an adjacent triple (3, 11), reducing it in size, proceeding from a rectangular and preferably square basic shape, and forms a joint in the form of a notch (21, 21', 21") with the side surface (17) of the adjacent triple (3, 11) of the forming die.

10. Forming die (1) according to claim 9, **characterized in that** at least a part of the extensions (19) lies in plane spanned by the respectively assigned side surface (7).

11. Forming die (1) according to claim 9 or 10, **characterized in that** the planes in which three side surfaces (5, 7, 9, 13, 15, 17) of a triple (3, 11) of the forming die lie intersect in an apex (23), and that an axis of symmetry runs through the apex (23), which axis encloses the same angle (α) relative to all the planes in which the side surfaces (5, 7, 9, 13, 15, 17) of the triple lie, wherein the axes of symmetry of all the triples are parallel to a local normal line vector (35) of the curved or domed surface, at least in a region of the retroreflector.

12. Forming die (1) according to claim 9 or 10, **characterized in that** the planes in which three side surfaces (5, 7, 9, 13, 15, 17) of a triple lie intersect in an apex (23), and that an axis of symmetry runs through the apex (23), which axis encloses the same angle (α) relative to all the side surfaces of the triple (3, 11) of the forming die, wherein the axes of symmetry of all the triples (3, 11) of the forming die are parallel to one another, at least in a region of the retroreflector.

13. Use of a forming die (1) according to one of claims 9 to 12 for the production of a retroreflector (101, 101', 101'') according to one of claims 1 to 8 or for the production of a further forming die (1) by means of galvanic molding.

14. Method for the production of a forming die (1) according to one of claims 9 to 12, wherein each triple (3, 11) is worked individually, by means of micro-cutting, out of the solid material of an original form, wherein preferably, a diamond needle on a multi-axial machine is used as a cutting tool, and wherein the original form preferably consists of aluminum, copper, gold, lead, a nickel-copper-zinc alloy or nickel phosphorus, **characterized in that** during cutting, joints in the form of notches and extensions of side surfaces on the basis of a curved or domed surface occur.

## Revendications

1. Rétroréflecteur (101, 101', 101") muni d'un ensemble de triplets (103, 111) comprenant, à chaque fois, trois faces latérales (105, 107, 109, 113, 115, 117) substantiellement perpendiculaires les unes aux autres, lesdits triplets (103, 111) étant disposés sur une surface courbe ou bombée, **caractérisé par le fait qu'**une courbure ou un bombement (157, 157') de la surface est égalisé(e) de façon telle que des triplets (103) individuels comportent des faces latérales (105, 107, 109) dotées d'au moins un prolongement (119), lequel prolongement s'étend le long d'une face latérale (115) d'un triplet (111) attenant, en s'amenuisant à partir d'une configuration de base rectangulaire et carrée de préférence, et forme un joint avec ladite face latérale (115) du triplet (111) attenant ; et **par le fait que** ledit joint est une encoche formant une arête de ladite face latérale (115) du triplet (111) attenant.

2. Rétroréflecteur (101, 101', 101") muni d'un ensemble de triplets (103, 111) comprenant, à chaque fois, trois faces latérales (105, 107, 109, 113, 115, 117) substantiellement perpendiculaires les unes aux autres, lesdits triplets (103, 111) étant disposés sur une surface courbe ou bombée, **caractérisé par le fait qu'**une courbure ou un bombement (157, 157') de la surface est égalisé(e) de façon telle que des triplets (103) individuels comportent des faces latérales (105, 107, 109) dotées d'au moins un prolongement (119), lequel prolongement s'étend le long d'une face latérale (115) d'un triplet (111) attenant, en s'amenuisant à partir d'une configuration de base rectangulaire et carrée de préférence, et forme un joint avec ladite face latérale (115) du triplet (111) attenant ; et **par le fait que** ledit joint est un renflement étagé (121) faisant saillie au-delà de ladite face latérale (115) du triplet (111) attenant.

3. Rétroréflecteur (101, 101', 101") selon la revendication 2, **caractérisé par le fait qu'**une structure des triplets (103, 111) représente un négatif de la structure des triplets d'un rétroréflecteur muni d'un ensemble de triplets (103, 111) comprenant, à chaque fois, trois faces latérales (105, 107, 109, 113, 115, 117) substantiellement perpendiculaires les unes aux autres, lesdits triplets (103, 111) étant disposés sur une surface courbe ou bombée, sachant qu'une courbure ou un bombement (157, 157') de ladite surface est égalisé(e) de façon telle que des triplets (103) individuels comportent des faces latérales (105, 107, 109) dotées d'au moins un prolongement (119), lequel prolongement s'étend le long d'une face latérale (115) d'un triplet (111) attenant, en amenuisant cette dernière à partir d'une configuration de base rectangulaire et carrée de préférence, et forme un joint avec ladite face latérale (115) du triplet (111) attenant, lequel joint est une encoche formant une arête de ladite face latérale (115) du triplet (111) attenant.

4. Rétroréflecteur (101, 101', 101") selon l'une des revendications 1 à 3, **caractérisé par le fait qu'**au moins une partie des prolongements (119) se trouve dans un plan dont l'étendue est couverte par la face latérale (105) respectivement associée.

5. Rétroréflecteur (101, 101', 101") selon l'une des revendications 1 à 4, **caractérisé par le fait qu'**une largeur du prolongement (119) est inférieure, d'au moins le facteur 5, à une longueur d'arête de la face latérale (105), sachant, de préférence, qu'une longueur dudit prolongement (119) mesure entre 50 % et 100 % de la longueur d'arête de la face latérale (105) voisine, le long de laquelle ledit prolongement (119) s'étend.

6. Rétroréflecteur (101, 101', 101") selon l'une des revendications 1 à 5, **caractérisé par le fait que** le prolongement (119) est disposé au niveau d'une zone d'angle de la face latérale en donnant ainsi naissance, de préférence, à une configuration de base rectangulaire de ladite face latérale à laquelle ledit prolongement se rattache en une configuration du type manche de poêle.

7. Rétroréflecteur (101, 101") selon l'une des revendications 1 à 6, **caractérisé par le fait que** les plans, dans lesquels trois faces latérales (105, 107, 109, 113, 115, 117) d'un triplet (103, 105) sont disposées, se coupent mutuellement en un sommet (123) et un axe de symétrie, passant par ledit sommet (123), décrit le même angle avec tous les plans dans lesquels les faces latérales (105, 107, 109, 113, 115, 117) dudit triplet (103, 105) sont disposées, sachant que, dans au moins une région dudit rétroréflecteur, les axes de symétrie de tous les triplets (103, 105) sont parallèles à un vecteur normal localisé de la surface courbe ou bombée.

8. Rétroréflecteur (101, 101') selon l'une des revendications 1 à 6, **caractérisé par le fait que** les plans, dans lesquels trois faces latérales (105, 107, 109, 113, 115, 117) d'un triplet (103, 105) sont disposées, se coupent mutuellement en un sommet (123) et un axe de symétrie, passant par ledit sommet (123), décrit le même angle avec toutes les faces latérales (105, 107, 109, 113, 115, 117) dudit triplet (103, 105), sachant que les axes de symétrie de tous les triplets (103, 105) sont parallèles les uns aux autres, au moins dans une région dudit rétroréflecteur.

9. Outil de moulage (1) dévolu à la production d'un rétroréflecteur conforme à l'une des revendications précédentes, ledit outil de moulage (1) comportant un ensemble de triplets (3, 11) qui comprennent, à chaque fois, trois faces latérales (5, 7, 9, 13, 15, 17) substantiellement perpendiculaires les unes aux autres,
les triplets (3, 11) dudit outil de moulage (1) étant disposés sur une surface courbe ou bombée,
**caractérisé par le fait qu'**une courbure ou un bombement de la surface est égalisé(e) de façon telle que des triplets individuels (3, 11) de l'outil de moulage (1) comportent des faces latérales (7, 9, 15, 17) dotées d'au moins un prolongement (19, 19'), lequel prolongement (19, 19') s'étend le long d'une face latérale (17) d'un triplet attenant (3, 11) dudit outil de moulage (1), en s'amenuisant à partir d'une configuration de base rectangulaire et carrée de préférence, et en constituant, avec ladite face latérale (17) du triplet attenant (3, 11) dudit outil de moulage (1), un joint revêtant la forme d'une encoche (21,21',21").

10. Outil de moulage (1) selon la revendication 9, **caractérisé par le fait qu'**au moins une partie des prolongements (19) se trouve dans un plan dont l'étendue est couverte par la face latérale (7) respectivement associée.

11. Outil de moulage (1) selon l'une des revendications 9 ou 10, **caractérisé par le fait que** les plans, dans lesquels trois faces latérales (5, 7, 9, 13, 15, 17) d'un triplet (3, 11) dudit outil de moulage (1) sont disposées, se coupent mutuellement en un sommet (23) et un axe de symétrie, passant par ledit sommet (23), décrit le même angle (a) avec tous les plans dans lesquels les faces latérales (5, 7, 9, 13, 15, 17) dudit triplet sont disposées, sachant que, dans au moins une région du rétroréflecteur, les axes de symétrie de tous les triplets sont parallèles à un vecteur normal localisé (35) de la surface courbe ou bombée.

12. Outil de moulage (1) selon l'une des revendications 9 ou 10, **caractérisé par le fait que** les plans, dans lesquels trois faces latérales (5, 7, 9, 13, 15, 17) d'un triplet sont disposées, se coupent mutuellement en un sommet (23) et un axe de symétrie, passant par ledit sommet (23), décrit le même angle (a) avec toutes les faces latérales dudit triplet (3, 11) de l'outil de moulage (1), sachant que les axes de symétrie de tous les triplets (3, 11) dudit outil de moulage (1) sont parallèles les uns aux autres, au moins dans une région du rétroréflecteur.

13. Utilisation d'un outil de moulage (1) conforme à l'une des revendications 9 à 12, pour fabriquer un rétroréflecteur (101, 101', 101") conforme à l'une des revendications 1 à 8, ou pour fabriquer un autre outil de moulage (1) par moulage galvanique.

14. Procédé de fabrication d'un outil de moulage (1) conforme à l'une des revendications 9 à 12, chaque triplet (3, 11) dudit outil de moulage étant usiné individuellement, par micro-découpe, à partir de la masse pleine d'une forme originelle, une aiguille diamantée étant préférentiellement utilisée en tant qu'outil de coupe sur une machine à axes multiples, et ladite forme originelle consistant préférentiellement en de l'aluminium, en du cuivre, en de l'or, en du plomb, en un alliage nickel-cuivre-zinc ou en du nickel-phosphore, **caractérisé par le fait que** des joints revêtant la forme d'encoches et des prolongements de faces latérales sont créés, lors de la découpe, suite à la présence d'une surface courbe ou bombée.
